# EUROPEAN PATENT APPLICATION

(11) **EP 3 037 753 A1**
(43) Date of publication of application: **29.06.2016**
(21) Application number: 15200685.4
(22) Date of filing: 17.12.2015
(51) Int. Cl.: F25D 17/08, F16K 15/03

(54) **CONDUIT FOR CONVEYING AIR TO A REFRIGERATOR COMPARTMENT AND REFRIGERATION APPARATUS COMPRISING SAID CONDUIT**

(30) Priority: 23.12.2014 IT PR20140103
(71) Applicant: Indesit Company S.p.A., 60044 Fabriano (AN) (IT)
(72) Inventor: CORBO, Luca, 81044 Tora e Piccilli (CE) (IT)
(74) Representative: Santonicola, Paolo

(57) **Abstract**

A conduit (10) for conveying air to a refrigerator compartment (2), comprising:
a partially metal door (101) hinged to the internal walls (10a) of the conduit (10);
an electromagnet (12) fastened to the external walls (10b) of the conduit (10), which, on being activated by an electrical current, generates a magnetic field such as to attract the door (101), thereby opening the conduit (10).

## Description

The present invention relates to a conduit for conveying air to a refrigerator compartment and a refrigeration apparatus comprising said conduit, in particular for use for cooling and storing foods, preferably for domestic applications.

On the market there are various models of fridge freezers, i.e. appliances provided with a refrigerator compartment and a freezer compartment. For example, in a no-frost fridge freezer, the air, refrigerated by suitable cooling means, is moved by a fan that conveys it to a conduit, which channels the air into the refrigerator compartment.

The flow of air through the conduit is controlled by the activation of the fan. When the fan is running, the refrigerated air passes through the conduit and arrives at the refrigerator compartment, so as to bring it to a lower temperature. By contrast, when the fan is not operating, the passage of refrigerated air toward the refrigerator compartment is interrupted.

The conduit is provided with a valve for adjusting the air flow. The purpose of this valve is to enable a flow of air to the refrigerator compartment when required and simultaneously to prevent moist air from flowing back from the refrigerator compartment in the opposite direction, i.e. from returning into the conduit when the fan is switched off, with the risk of air condensing or freezing inside the conduit itself.

For example, patent EP2090854, in the name of the Applicant, proposes a non-return valve of the membrane type. The valve comprises a perimeter frame applied to a section of the conduit and a membrane made of a silicone material, which has an edge constrained to the perimeter frame.

When the fan is running and the airflows along the conduit to the refrigerator compartment, the membrane is partly lifted by the air, allowing it to flow.

When the fan is switched off and the air thus stops flowing to the refrigerator compartment, the membrane abuts on the perimeter frame in such a way as to occlude the conduit and prevent the backflow of air from the refrigerator compartment to the cooling means.

However, on being subjected to the flow of refrigerated air toward the refrigerator compartment, the membrane is only partly lifted, so that there are pressure drops due to the fact that the air flow is diverted. Furthermore, the silicone membrane may become deformed and give rise to small passages of air even if the valve is closed. Finally, silicone tends to undergo wear (and thus deformation) over time, so the reliability of occlusion of the conduit is compromised.

There are further known solutions in which the valve consists in a door or shutter made of rigid plastic material (this valve is commonly referred to as a "damper" in technical jargon). There is also provided a motor for actuating the door so as to open and close it depending on the demand for cold air from the refrigerator compartment.

Although this solution is more reliable than a membrane valve, the use of a motor brings obvious disadvantages in terms of noise, bulk and costs.

In this context, the technical task at the basis of the present invention is to propose a conduit for conveying air to a refrigerator compartment and a refrigeration apparatus comprising said conduit, which overcome the aforementioned disadvantages of the prior art.

In particular, it is an object of the present invention to provide a conduit for conveying air to a refrigerator compartment which is quieter compared to the known solutions.

Another object of the present invention is to provide a conduit for conveying air to a refrigerator compartment and a refrigeration apparatus which are more reliable compared to the known solutions.

The stated technical task and specified objects are substantially achieved by a conduit for conveying air to a refrigerator compartment and a refrigeration apparatus comprising said conduit, having structural and functional characteristics in accordance with the appended independent claims, further embodiments being identified in the appended and corresponding dependent claims.

Additional features and advantages of the present invention will become more apparent from the approximate, and hence non-limiting, description of a preferred but not exclusive embodiment of a conduit for conveying air to a refrigerator compartment and a refrigeration apparatus comprising said conduit, as illustrated in the accompanying drawings, in which:
- figure 1 illustrates a refrigeration apparatus according to the present invention, in a sectional side view;
- figures 2 and 3 illustrate a conduit for conveying air to a refrigerator compartment, with the adjustment valve for adjusting the air flow respectively in an open and a closed configuration of, according to the present invention, in a sectional side view.

With reference to the figures, the number 1 denotes a refrigeration apparatus for cooling and storing foods, preferably for domestic applications.

The refrigeration apparatus 1 comprises a refrigerator compartment 2 and a freezer compartment 3 for storing foods.

Preferably, the temperature of the refrigerator compartment 2 is comprised between about 0°C and 10°C. Preferably, the temperature of the freezer compartment 3 is lower than about -15°C.

In the embodiment illustrated here, the refrigerator compartment 2 is positioned above the freezer compartment 3. In an unillustrated variant embodiment, the refrigerator compartment 2 is positioned below the freezer compartment 3.

The refrigeration apparatus 1 comprises a means 4 for cooling air intended for the refrigeration of the refrigerator compartment 2 and a means 5 for moving the refrigerated air. For example, the cooling means 4 comprises a refrigeration circuit of a known type, in which a refrigerant fluid circulates. Preferably, the means 5 for moving the refrigerated air consists in a fan which, on being activated, conveys the air to a conduit 10.

In particular, the conduit 10 extends from the cooling means 4 to the refrigerator compartment 2.

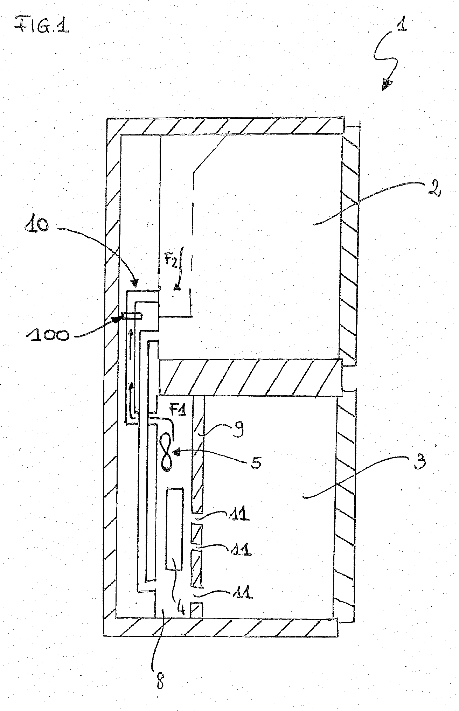

In this context, the flow of refrigerated air that goes from the cooling means 4 to the refrigerator compartment 2 is called "direct flow" and is indicated in figure 1 with the letter F1. The flow of air from the refrigerator compartment 2 to the cooling means 4 is instead called "backflow" and is indicated in figure 1 with the letter F2.

Preferably, both the means 4 for cooling air and the fan 5 are disposed in a chamber 8 adjacent to the freezer compartment 3.

The chamber 8 is separated from the freezer compartment 3 by means of a wall 9 having a plurality of slits 11. The fan 5, on being activated, also conveys air to the freezer compartment 3 through the slits 11 of the dividing wall 9.

The conduit 10 comprises an adjustment valve 100 for adjusting the air flow. In particular, the adjustment valve 100 is operatively active upon the conduit 10 so as to prevent the backflow F2 and enable or disable the direct flow F1.

The adjustment valve 100 comprises a door 101 having a first end 101 a hinged to the conduit 10 in such a manner as to rotate between a closed configuration, wherein the door 101 occludes the conduit 10 so as to prevent the backflow of air from the refrigerator compartment 2, and an open configuration, wherein a second free end 101 b of the door 101 approaches the internal walls 10a of the conduit 10 so as to enable the flow of air to the refrigerator compartment 2.

In other words, when the door 101 is in the closed configuration, it prevents the backflow F2, whereas when it is in the open configuration it enables the direct flow F1.

Originally, an electromagnet 12 is constrained to the conduit 10. There are also provided means for generating an electric current for activating the electromagnet 12. Such means for generating the electric current are of a known type and will not be further described or illustrated.

Advantageously, the door 101 is at least partially made of a metal material so that in response to the activation of the electromagnet 12, the door 101 is attracted by the magnetic field induced by the electromagnet 12.

In such a manner, the door 101 will switch from the closed configuration to the open configuration and will be maintained in the latter for as long as the electromagnet 12 remains active.

Preferably, the electromagnet 12 is fastened to the external walls 10b of the conduit 10.

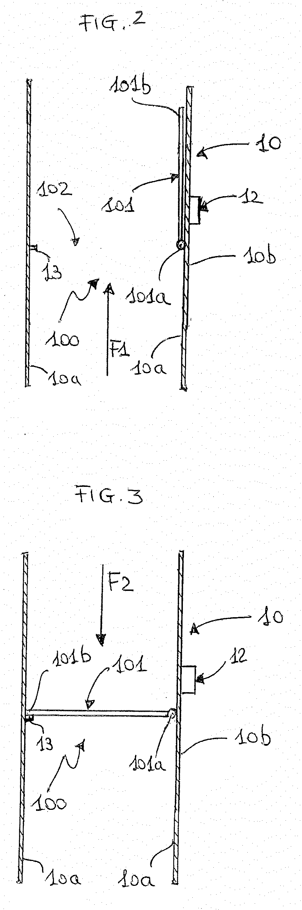

As can be seen in figures 2 and 3, the electromagnet 12 is situated on the opposite side from the first end 101 a of the door 101 relative to the wall of the conduit 10.

The distance of the electromagnet from the first end 101 depends, advantageously, on the force exerted by the electromagnet. Advantageously, this distance is less than 2 cm.

In the preferred embodiment, the door 101 is made entirely of a metal (ferromagnetic) material.

Preferably, the conduit 10 comprises a profile 13 protruding from the internal walls 10a of the conduit 10, the profile serving as an abutment surface for the door 101 in the closed configuration thereof. In particular, in the closed configuration, the second end 101 b of the door 101 abuts on the profile 13. For example, the profile 13 is obtained by appropriately shaping the internal walls 10b of the conduit 10. Alternatively, the profile 13 is fastened to the internal walls 10b of the conduit 10.

Preferably, the conduit 10 has a substantially rectangular cross-section, so that the door 101 also has a rectangular planar extension.

The operation of the refrigeration apparatus comprising the conduit proposed here is described below.

Let us suppose that the door 101 is initially in the configuration wherein the conduit 10 is closed (see figure 3).

Let us suppose that the fan 5 is activated, so that air is conveyed to the conduit 10, and the electromagnet 12 is activated, which generates a magnetic field.

Being made partially or entirely of a metal material, the door 101 is attracted by the electromagnet 12, so that by rotating it moves into the open configuration (see figure 2).

The direct flow F1 thus passes through the conduit 10 and reaches the refrigerator compartment 2. For as long as the electromagnet 12 remains active, the door 101 will remain in the open configuration.

As can be seen in figure 2, the door 101 is substantially positioned alongside the internal walls 10a of the conduit 10, thus enabling a complete opening of the conduit 10.

When it is desired to interrupt the direct flow F1 (for example upon reaching a sufficiently low temperature in the refrigerator compartment 2), the electromagnet 12 is deactivated, so that the door 101 is brought by gravity back into the closed configuration of the conduit 10 (see figure 3).

In this manner the door 101 abuts on the profile 13 and thus prevents the passage of the backflow F2.

From the description made, the characteristics of the conduit for conveying air to a refrigerator compartment and the refrigeration apparatus comprising that conduit, according to the present invention, appear clear, as do the advantages thereof.

In particular, as an electromagnet is used and the door of the valve is made at least partially of a metal material, the opening of the valve does not require any motor and is thus quiet, compact and economical.

Moreover, in the open configuration the door is substantially positioned alongside the internal walls of the conduit, so that the direct flow of air does not undergo diversions.

In addition, the metal door assures a reliable closure of the conduit (in fact, the metal is not deformed by the air flow).

Finally, the control of the opening and closing of the conduit is more reliable since it is entrusted to the electromagnet, not to the air flow, which could undergo undesirable fluctuations.

## Claims

1. Conduit (10) for conveying air to a refrigerator compartment (2), comprising:
an adjustment valve (100) for adjusting the airflow, comprising a door (101) having a first end (101 a) that is hinged to said conduit (10) in such a manner as to rotate between a closed configuration, wherein the door (101) occludes said conduit (10) so as to prevent the backflow of air from the refrigerator compartment (2), and an open configuration, wherein a second free end (101 b) of said door (101) approaches the internal walls (10a) of the conduit (10) so as to enable the flow of air to the refrigerator compartment (2),
**characterized in that** it further comprises:
an electromagnet (12) constrained to said conduit (10);
means for generating an electric current for activating said electromagnet (12), said door (101) being at least partially made of a metal material so that in response to the activation of said electromagnet (12), the door (101) is attracted by the electromagnet (12) and takes on the open configuration.

2. Conduit (10) according to claim 1, wherein said electromagnet (12) is fastened to the external walls (10b) of said conduit (10).

3. Conduit (10) according to claim 1 or 2, wherein said door (101) is made entirely of a metal material.

4. Conduit (10) according to any one of the preceding claims, further comprising a profile (13) protruding from the internal walls (10a) of said conduit (10), the second end (101b) of said door (101) abutting on said profile (13) when the door (101) is in the closed configuration.

5. Conduit (10) according to any one of the preceding claims, **characterized in that** it is substantially rectangular in cross-section, so that the planar extension of said door (101) is substantially rectangular.

6. Conduit (10) according to any one of the preceding claims, wherein, in the open configuration, said door (101) is substantially arranged alongside the internal walls (10a) of the conduit (10).

7. Refrigeration apparatus (1) comprising:
a refrigerator compartment (2);
means for cooling (4) air;
a conduit (10) according to any one of the preceding claims;
movement means (5) for moving the refrigerated air and conveying it towards said conduit (10).
